# EUROPEAN PATENT SPECIFICATION

(11) **EP 1 304 844 B1**
(45) Date of publication and mention of the grant of the patent: **04.04.2007**
(21) Application number: 01124994.3
(22) Date of filing: 19.10.2001
(51) Int. Cl.: H04L 29/06, G06F 1/00

(54) **Content protection and copy management system for a network**
System zum Inhaltsschutz und zur Kopierverwaltung für ein Netzwerk
Système de protection de contenu et de gestion de duplication pour un réseau

(43) Date of publication of application: 23.04.2003
(73) Proprietor: Sony Deutschland GmbH, 50829 Köln (DE); SONY UNITED KINGDOM LIMITED, Weybridge, Surrey KT13 0XW (GB); SONY CORPORATION, Tokyo 141 (JP)
(72) Inventor: Szucs, Paul, c/o Adv.Tech.Center Stuttgart, 70327 Stuttgart (DE); Spalink, Gerd, c/o Adv.Tech.Center Stuttgart, 70327 Stuttgart (DE); Schwager,Andreas,c/o Adv.Tech.Center, Stuttgart, 70327 Stuttgart (DE); Barry, Richard. c/o Sony NPE, Hampshire RG22 4SB (GB); Sato, Masahiko, Sony Corporation, Tokyo 141-0001 (JP)
(74) Representative: Müller - Hoffmann & Partner

(56) References cited:
- EP-A- 1 113 617
- WO-A-01/06787

## Description

The present invention relates to a content protection and copy management system for a network, a conditional access module for a content protection and copy management system for a network, and a method for content protection and copy management for a network.

WO 01 06787 A discloses a secure digital data distribution system for an encrypted video signal comprising a broadcasting system with a receiver and decoder unit including a decryption device for decrypting the encrypted video signal. The decrypted video signal is then re-encrypted by a second encryption device and transmitted to a digital projector which decrypts the re-encrypted video signal.

From EP-A-1 113 617 a system and method for transferring the right to decode messages has been known. Among key holders the rights to decode and decrypt messages are transferred in a way that does not explicitly reveal decoding and decrypting keys used and the original messages.

The references listed at the end of this specification provide several industry standards for networks, in particular to connect consumer electronic devices, and for providing security measures within these networks. However, all described security measures refer to an individual protection only, e.g. enabling a particular device to decrypt and process an encrypted content stream. This concept, however, restricts the flexibility which provision is the aim of the networking structure.

Therefore, it is the object underlying the present invention to provide a content protection and copy management system for a network, a conditional access module for a content protection and copy management system for a network, and a method for content protection and copy management for a network which facilitates an enhanced user-friendly and flexible system in particular for consumer equipment

According to the present invention this object is solved by a content protection and copy management system for a network according to independent claim 1, a conditional access module for a content protection and copy management system for a network according to independent claim 15, and a method for content protection and copy management for a network according to independent claim 20. Preferred embodiments thereof are respectively defined in the respective following subclaims. A computer program product according to the present invention is defined in claim 24.

Therewith, a content protection and copy management system for a network according to the present invention comprises at least one conditional access module within the network, respectively adapted to receive at least one encrypted content stream through the network, to decrypt a respective received encrypted content stream, and to apply a secure link encryption to each decrypted content stream before outputting it to the network.

Therewith, according to the present invention a clear logical seperation of the conditional access unit from a receiver and/or decoder unit is achieved and a secure (digital) interface is defined between them. According to the invention basically existing standards are used, but an increased security is achieved, as decrypted (digital) content is not made available at the conditional modules' external (digital) interfaces, but a free transmission within the network is possible, since the content stream (which also refers to services transmitted seperately or additionally to the content and which might be a full transport stream, a partial transport stream or any other kind of data stream) is secure link encrypted before being output to the network (the term "secure link encryption" also includes a secure bus encryption or the like).

Of course, the network to which the invention is applicable might be any kind of network, i.e. a wired network, e.g. a cable network or a optical fibre network, or a wireless network.

Preferably, the content protection and copy management system according to the present invention additionally comprises at least one decoder device adapted to receive at least one secure link encrypted content stream through network, to decrypt and eventually process said at least one received secure link encrypted content stream.

In this case, further preferably, in the content protection and copy management system according to the present invention a respective conditional access module authenticates a respective decoder device before outputting a secure link encrypted content stream through the network to said decoder device, and preferably before decrypting said corresponding received encrypted content stream.

Preferably, the content protection and copy management system according to the present invention additionally comprises at least one receiver device, respectively adapted to receive at least one encrypted content stream and to transmit said at least one encrypted content stream through the network to at least one conditional access module.

In this case, further preferably, in the content protection and copy management system according to the present invention a respective receiver device applies a secure link encryption to at least one respective received encrypted content stream before outputting it to the network.

Preferably, in the content protection and copy management system according to the present invention a respective conditional access module performs an authentication and key exchange process before outputting said at least one secure link encrypted content stream to the network, and preferably before decrypting said at least one received encrypted content stream.

Preferably, in the content protection and copy management system according to the present invention system renewability is supported by way of analysing system renewability messages transmitted to the network and revoking devices and/or modules connected to the network accordingly.

Preferably, the content protection and copy management system according to the present invention additionally comprises a controller entity which uses the conditional access module or a conditional access subunit providing a control interface for the decryption of encrypted content supplied through the network, or for the sourcing of such content to a sink devices with link encryption in order to perform the content protection and copy management functionality.

In this case, further preferably, in the content protection and copy management system according to the present invention said controller entity uses a receiver device or tuner subunit providing a control interface which allows a controller entity which might reside in another device to obtain the available contents and control the receiver or tuner to output one or more content streams to the network in order to perform the content protection and copy management functionality.

In this case, preferably alternatively or aditionally, in the content protection and copy management system according to the present invention said controller entity uses a panel subunit providing user interface service for a device or module in order to perform the content protection and copy management functionality.

In this case, further preferably alternatively or aditionally, in the content protection and copy management system according to the present invention said controller entity uses a modem subunit providing a control interface to manage dial-up access to and from a telephony network in order to perform the content protection and copy management functionality.

In this case, still further preferably alternatively or aditionally, in the content protection and copy management system according to the present invention said controller entity uses a smart card subunit enabling the controller to detect and control the status of, and to exchange data with a smart card inserted in its smart card slot in order to perform the content protection and copy management functionality.

In this case, still further preferably alternatively or aditionally, in the content protection and copy management system according to the present invention said controller entity is adapted to request encrypted content to be output from a device to the network.

In this case, still further preferably alternatively or aditionally, the content protection and copy management system according to the present invention additionally comprises a target entity which is adapted to supply or receive encrypted content on the command of a controller entity.

Preferably, in the content protection and copy management system according to the present invention said secure link encryption is common for all content protection and copy management system complient devices.

A conditional access module for a content protection and copy management system for a network according to the present invention comprises an interface to receive at least one encrypted content stream through the network, a decryption engine to decrypt a respective received encrypted content stream, and an encryption engine to apply a secure link encryption to each decrypted content stream before outputting it to the network.

Preferably, the conditional access module according the present invention additionally comprises a smart card subunit modelled on the smart card standard to enable an authentication and key exchange process.

Preferably, the conditional access module according the present invention additionally comprises a panel subunit providing a user interface of the conditional access module so that a user interface model and dialogues can be provided to a controller entity containing a user interface, preferably a display or a speech syntheziser and user input capabilities.

Preferably, the conditional access module according the present invention is adapted to receive said at least one encrypted content stream from different sources through the network.

Preferably, the conditional access module according the present invention is adapted to output said at least one secure link encrypted content stream to different sinks through the network.

The method for content protection and copy management for a network according to the present invention comprises the steps of receiving at least one encrypted content stream through the network, decrypting a respective received encrypted content stream, and applying a secure link encryption to each decrypted content stream before outputting it to the network.

Preferably, the method according to the present invention additionally comprises the step of authenticating a respective decoder device before outputting a secure link encrypted content stream through the network to said decoder device, and preferably before decrypting said corresponding received encrypted content stream.

Preferably, the method according to the present invention additionally comprises the step of performing an authentication and key exchange process before outputting said at least one secure link encrypted content stream to the network, and preferably before decrypting said at least one received encrypted content stream.

Preferably, the method according to the present invention additionally comprises the step of supporting system renewability by way of analysing system renewability messages transmitted to the network and adapting devices and/or modules connected to the network accordingly.

A computer program product according to the present invention comprises computer program means adapted to perform the method steps as defined in anyone of the above described method embodiments and/or to embody at least parts of the conditional access module according to anyone of the above described conditional access module embodiments and/or to embody at least parts of the content protection and copy management system according to anyone of the above described content protection and copy management system embodiments.

Therewith this invention proposes a solution for DVB Content Protection and Copy Management (CPCM) which concentrates on providing a user-friendly and flexible system for consumer equipment, while encouraging horizontal markets for CPCM and Conditional Access (CA) solutions. The basic idea is to provide a clear logical separation of the conditional access unit or module from the receiver and/or decoder unit or device, and to define the secure digital interface between them. The core content encryption method deployed in the broadcast stream is outside the scope of the invention and remains the issue of a service provider.

The interface between receiver equipment and conditional access module is able to carry multiple audio-video or other data content streams concurrently. When the receiver needs to have an encrypted service decrypted, it issues that encrypted content stream to the CA module via the digital interface. The CA module authenticates the decoder device (which could physically also be the receiver device) and applies secure link encryption to the decrypted stream prior to its output at the digital interface.

According to the invention the following goals are met:
- to be implementable at low cost and in an acceptable timeframe,
- to support management of service, including response to theft of service, by the service provider,
- to support open competition in retail products,
- to support content owner and network operator requirements for licensing enforcement of content protection requirements in hosts, including revocation of known compromised devices, at low cost,
- to work across all type of networks: satellite, cable, and terrestrial. The Content Protection system does not necessarily require a return channel, and
- to facilitate consumer-friendly solutions for CPCM, that are flexible and easy to use.

The invention is preferably based upon existing industry standards. Where necessary, extensions are proposed for those parts of the standards which currently do not support the required functionality.

The invention brings with it the advantage of increased security, as decrypted digital content is not made available at the modules' external digital interfaces. Compliance with the invention also implies that devices are internally robust against efforts to circumvent the content protection mechanism.

Being based on an established network interface, the proposed solution offers additional advantages in flexibility. Additional CA modules can simply be connected to a user's existing CPCM system according to the present invention. The interface standard and protocols below take care of the management of multiple modules in a network.

Further features and advantages of the present invention will become apparent on basis of the following detailed description of preferred embodiments according to the present invention taken in conjunction with the accompanying figures, in which
- **Fig. 1**: shows a first preferred embodiment of a basic CPCM consumer device setup according to the present invention;
- **Fig. 2**: shows a block diagram of a DVB Receiver (IDTV) according to the first preferred embodiment of the present invention;
- **Fig. 3**: shows a block diagram of a conditional access module according to the first preferred embodiment of the present invention;
- **Fig. 4**: shows an overview of functional areas addressed according to the first preferred embodiment of the present invention;
- **Fig. 5**: shows a CPCM device interface basic protocol stack according to the first preferred embodiment of the present invention;
- **Fig. 6**: shows CPCM AV/C subunits according to the first preferred embodiment of the present invention;
- **Fig. 7**: shows a second preferred embodiment of a basic CPCM consumer device setup according to the present invention using multiple CA modules;
- **Fig. 8**: shows a third preferred embodiment of a basic CPCM consumer device setup according to the present invention using a second display device;
- **Fig. 9**: shows a flow chart of a preferred embodiment according to the present invention, here a CPCM Scenario: Service decryption;
- **Fig. 10**: shows a flow chart of a preferred embodiment according to the present invention, here a CPCM Scenario: PPV event decryption;
- **Fig. 11**: shows a flow chart of a preferred embodiment according to the present invention, here a CPCM Scenario: Recording of protected content;
- **Fig. 12**: shows a flow chart of a preferred embodiment according to the present invention, here a CPCM Scenario: Playback of recorded protected content,
- **Fig. 13**: shows a CPCM Overall Architecture according to a preferred embodiment of the present invention;
- **Fig. 14**: shows a CPCM Target Architecture (CA Module) according to a preferred embodiment of the present invention;
- **Fig. 15**: shows a CPCM Controller Architecture according to a preferred embodiment of the present invention; and
- **Fig. 16**: shows a CPCM Manager Architecture according to a preferred embodiment of the present invention.

The following description of preferred embodiments of the present invention is based on an IEEE 1394 network and a DVB environment, but the invention is not not restricted thereto. Also other types of wired or wireless networks are supported by the invention as well as other types content streams or formats, e.g. DAB.

The following abbreviations are used throughout this specification:
- AKE: Authentication and Key Exchange
- AV/C: Audio Video Control
- CCI: Copy Control Information
- CMP: Connection Management Procedures
- CRL: Certificate Revocation List
- CTS: Command and Transaction Set
- DTCP: Digital Transmission Copy Protection
- FCP: Function Control Protocol
- IDTV: Integrated Digital Television (Set)
- SRM: System Renewability Message
- TS: (MPEG-2) Transport Stream
- CA: Conditional Access
- CPCM: Content Protection and Copy Management
- SRM: System Renewability Messages
- API: Application Programming Interface
- DTV: Digital TV
- STB: Set Top Box
- AV: Audio Video
- OSD: On Screen Display
- EMI: Encrypted Mode Indicator

### General Description of the Architecture

The preferred embodiments of the invention are based upon the application of the "5C" (five company) Digital Transmission Content Protection (DTCP) specification [2] as the encryption method applied over the digital interface between CPCM compliant devices. The DTCP specification defines a cryptographic protocol for protecting audio/video entertainment content from illegal copying, intercepting and tampering as it traverses high performance digital buses, such as the IEEE 1394 standard. Thus for Content Protection, the fundamental concept is that of bus, or link encryption as opposed to content encryption. The main advantage of applying a bus encryption strategy for DVB CPCM is that no additional processing of source material is necessary above the DVB CA mechanisms already in place.

In the shown examples and according to the preferred embodiments of the present invention, the IEEE 1394 High Performance Serial Bus [1] is adopted as the common digital interface between CPCM compliant devices in the home environment.

The IEC61883 protocol [3] provides a generic framework for audio/video device control and basic content stream management with IEEE1394. The AV/C protocol [4], which uses IEC61883, is preferably used as the control protocol between CPCM compliant devices.

The basic configuration of such a CPCM system consists of a DVB receiver 1 device connected to the Conditional Access (CA) module 2 via IEEE 1394. The core content encryption method deployed in the broadcast stream is outside the scope of the invention and remains the issue of the service provider.

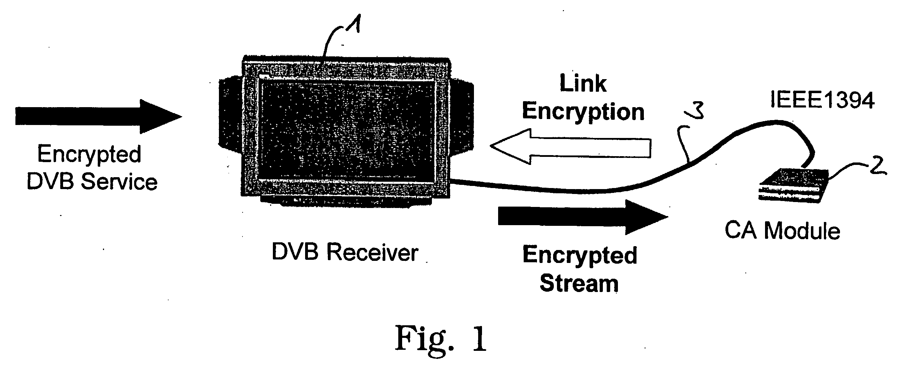

Figure 1 shows the basic CPCM setup of a DVB reciever (IDTV) 1 and conditional access module 2. According to this first preferred embodiment of the present invention, an encrypted DVB service is received by a DVB receiver 1, in this case an Integrated Digital Television Set (IDTV), which is connected to a CA module 2 via an IEEE 1394 link 3. The DVB receiver 1 provides the received encrypted stream to the CA module which returns a link encrypted stream to the IDTV via the IEEE 1394 link 3.

In this example scenario, the IDTV 1 has the task of providing the encrypted content stream at the network interface. It could optionally also apply DTCP encryption additionally to this stream. Also, it is an option whether the full transport stream is output, or whether a partial transport stream is generated, containing only the service to be decrypted and all necessary auxiliary information.

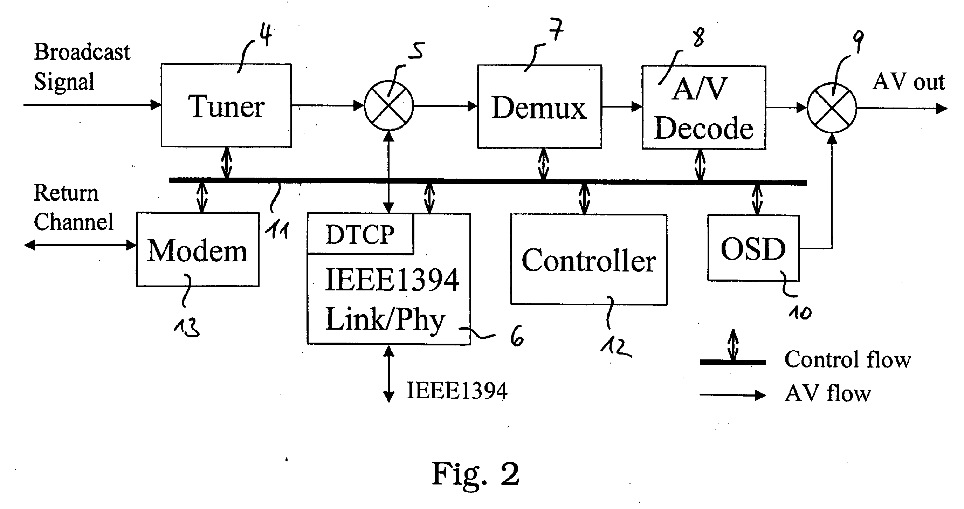

Figure 2 shows the block diagram of the DVB receiver 1 implementing CPCM as described according to this preferred embodiment of the invention. The DVB receiver 1 comprises a tuner 4 receiving the broadcast signal, here among others the encrypted DVB service, and supplying a resulting transport stream (in the following also simply referred to as AV stream) to a switch 5. The switch 5 is connected to an IEEE1394 link/physical layer module 6 including a DTCP module and to a demultiplexer 7. The IEEE1394 link/physical layer module 6 is connected to the IEEE1394 link. The switch 5 is able to switch at least one AV stream from the tuner 4 and/or at least one AV stream supplied from the IEEE1394 link/physical layer module 6 to the demultiplexer 7, and/or at least one AV stream from the tuner 4 to the IEEE1394 link/physical layer module 6. The demultiplexer 7 is adapted to supply at least contents from the received AV streams to an AV decoder which outputs AV signals to a mixer 9. The mixer 9 receives additionally On Screen Display (OSD) information from an OSD unit 10. The tuner 4, the demultiplexer 7, the AV decoder 8, the OSD unit 10, and the IEEE1394 link/physical layer module 6 including a DTCP module are connected via a control bus 11. Also connected to this control bus 11 are a controller 12 and a modem 13 which supplies a return channel e.g. to a broadcaster or service provider.

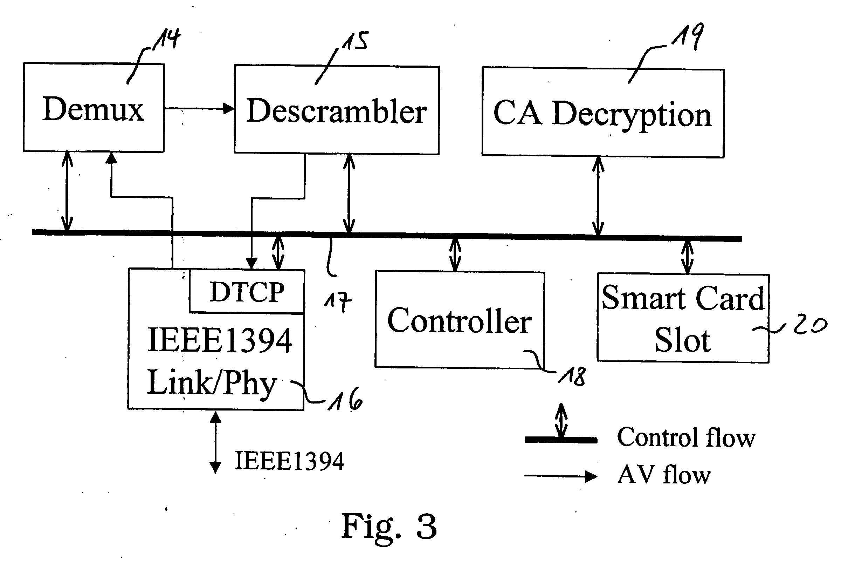

Figure 3 shows the block diagram of the CA module implementing CPCM as described according to this preferred embodiment of the invention. A IEEE1394 link/physical layer module 16 including a DTCP module which is connected to the IEEE1394 link supplies at least one received AV stream to a demultiplexer 14 which outputs at least parts thereof to a descrambler 15. The descrambler 15 is connected to the DTCP module of the IEEE1394 link/physical layer module 16. The demultiplexer 14, the descrambler 15 and the IEEE1394 link/physical layer module 16 are connected via a control bus 17. Also connected to this control bus 17 are a controller 18, a CA decryption unit 19 and a smart card slot unit 20.

According to the DTCP specification, the two devices, i.e. the DVB receiver 1 and the CA module 2, will authenticate each other to establish their mutual ability to provide decryption services. When the IDTV user selects an encrypted service, the IDTV 1 passes on a respective request to the CA module 2. The CA module 2 checks whether it is able to satisfy the request, then source and sink authentication is carried out before the IDTV 1 provides the stream containing the required encrypted service on the IEEE1394 interface. The CA module 2 is able to receive the CA encrypted stream in one isochronous channel, and subject to authentication of the IDTV 1 as a legitimate sink device, it will decrypt the service and apply DTCP secure link encryption to that stream before making it available in a separate IEEE1394 isochronous channel for the IDTV 1 to receive. Link decryption can be performed in the IDTV 1 and the stream is decoded normally.

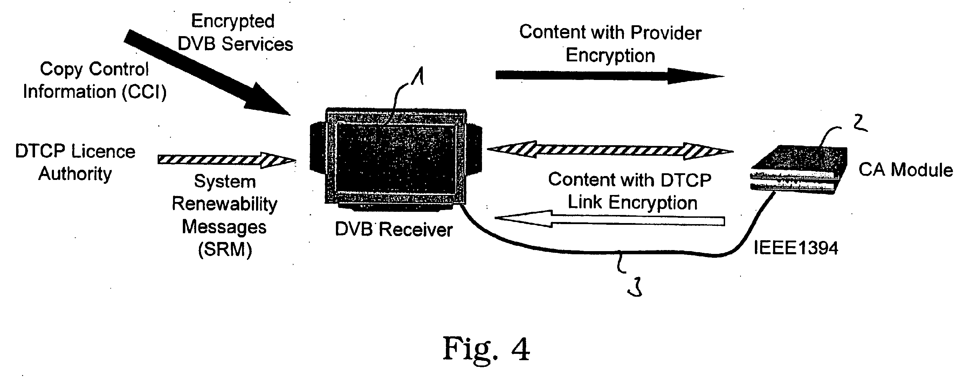

Figure 4 gives an overview showing the functional areas addressed by this embodiment of the invention. As already shown in figure 1, the encrypted DVB services are provided to the DVB receiver 1 which supplies the content with provider encryption to the CA module 2 via the IEEE1394 link 3 and the CA module provides the content with DTCP link encryption back to the DVB receiver 1. Information about the DTCP licence authority and/or system renewability messages (SRM) are provided to the DVB receiver 1 and through the DVB receiver 1 to the CA module 2. As described above, the CA module 2 performs an authentication preferably based on this information about the DTCP licence authority and/or system renewability messages (SRM) with the DVB receiver 1.

### IEEE1394 and General Protocol Stack

The preferred embodiment of the invention builds upon the IEEE 1394 High Performance Serial Bus [1], also known as i.LINK, or "FireWire", as the common digital interface between CPCM-compliant devices. IEEE1394 is a standardised, readily available and consumer friendly digital interface particularly suited to the bi-directional transport of DVB content between devices. The inherent characteristics of IEEE1394 make it very suitable for the application of DVB conditional access, namely:
- up to 400 Mbps total transfer capacity
- concurrent asynchronous and isochronous transfer modes; asynchronous for commands and status information, and isochronous for real-time audio-video streams
- multiple (up to 63) concurrent isochronous streams

Above IEEE1394, preferably a standardised method of communications is used, defined in specification IEC61883 [3]. Parts 1 and 4 of IEC61883 are relevant for DVB-CPCM. Part 1 defines the generic transport of asynchronous commands, responses and status information, and the transport of isochronous audio/video data streams over IEEE1394. Part 4 defines the method of carrying MPEG-2 Transport Streams packets inside IEEE1394 isochronous packets.

A collection of standardised command and transaction sets are deployed above IEC61883. These are generally referred to as the AV/C (Audio/Video Control) command and transaction sets, and are standardised by the 1394 Trade Association (1394TA). The generic part of the AV/C protocol is defined in [4]. AV/C command and transactions sets always use the Function Control Protocol (FCP), defined in IEC61883 part 1, for communications. The Connection Management Procedures (CMP) stipulate how isochronous connections between devices are managed.

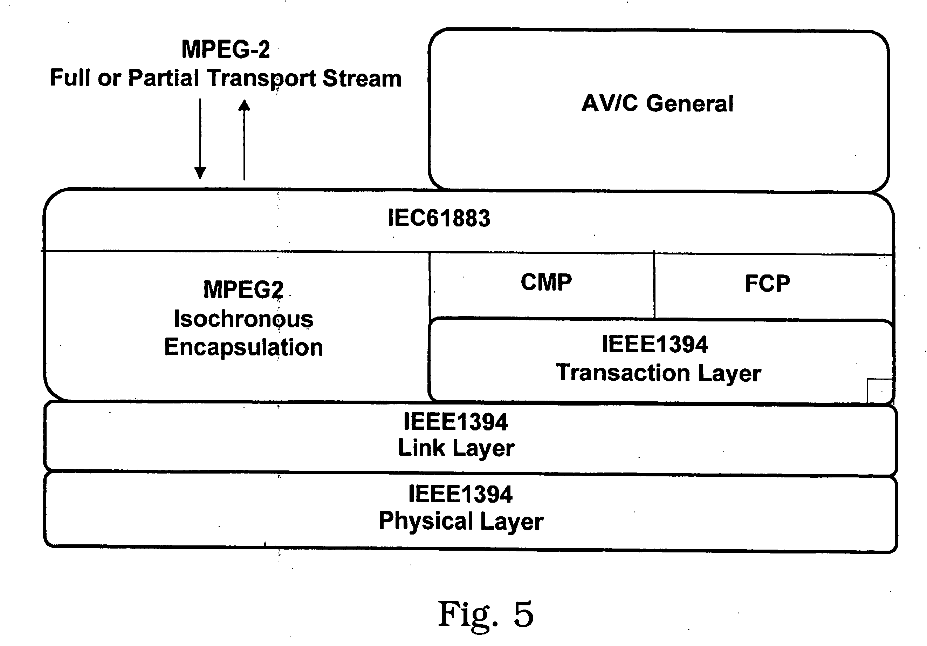

This protocol stack is depicted in figure 5 which shows the IEEE1394 physical layer on bottom, the IEEE1394 link layer on top of the IEEE1394 physical layer, the MPEG2 isochronous encapsulation and the IEEE 1394 transaction layer on top of the IEEE1394 link layer, the CMP and FCP layers on top of the IEEE 1394 transaction layer, the IEC61883 layer on top of the MPEG2 isochronous encapsulation and the CMP and FCP layers, and the AV/C general layer on top of the IEC61883 layer. The IEC61883 layer is used to communicate MPEG-2 full or partial transport streams.

### Digital Transmission Content Protection (DTCP)

The "5C" (five company) DTCP Specification [2] provides a secure bus encryption mechanism, for example on the IEEE1394 High Performance Serial Bus. This specification, developed by Hitachi, Ltd., Intel Corporation, Matsushita Electric Industrial, Co. Ltd., Sony Corporation, and Toshiba Corporation, is available from the Digital Transmission Licensing Administrator (DTLA), http:// www.dtcp.com/.

DTCP defines the concept of source and sink devices for protected content. Real devices can be a combination of source and sink function. Furthermore, devices may be format-cognizant (can meaningfully interpret the stream contents) or format-non-cognizant (have no such capability).

DTCP provides technology for content protection and copy management at four levels:
- Copy Control Information (CCI)
- Device authentication and key exchange (AKE)
- Content encryption
- System renewability

### Copy Control Information (CCI)

CCI is provided at two levels - Embedded CCI and the Encryption Mode Indicator (EMI). Embedded CCI is evident only to format-cognizant devices, as at least an initial stage of content decoding must be performed in order to verify the CCI information. EMI is evident to both format-cognizant and format-non-cognizant devices.

DTCP CCI can associate one of four copy management statuses:
- Copy-never
- No-more-copies
- Copy-one-generation
- Copy-free

Embedded CCI is applied to DVB transport streams in the form of an additional descriptor, inserted into the program_info loop of the PMT of each protected program, and/or into the ES_info_loop for any component elementary streams with a protection mode different to that of the parent program. Appendix B of the DTCP specification [2] provides the definition of this new descriptor, the DTCP_Descriptor. As well as the CCI, this descriptor can also carry retention mode (if indicated, this informs how long content is allowed to be retained by the consumer) and analogue copy information.

EMI is included in the packet headers of the IEEE 1394 isochronous packets carrying protected content.

### Authentication and Key Exchange (AKE)

Before any protected content is transmitted on the link, the involved devices go through the AKE process in order to verify the legitimacy of the content decryption and link encryption by the CA module.

All DTCP compliant devices are assigned a certificate by the DTLA, which is securely stored inside the device.

Device authentication is carried out either on the basis of device-unique ID numbers and public-private key pairs, assigned by the License Authority, the DTLA (full authentication); or on the basis of the assertion of random challenges to shared secrets, and hashing (restricted authentication).

Restricted authentication requires less processing power than full authentication, but can only protect content with copy managements "copy-one-generation" and "no-more-copies".

After successful (full or restricted) device authentication, a common set of Exchange Keys are established between the source device and all sink devices involved in the exchange of protected content.

Using the Exchange Keys, a random number generated by the source device, and secret constant values corresponding to each of the copy management modes, defined by the DTLA, the Content Key is generated. The Content Key is used to encrypt/decrypt the content in the encryption engine.

Full details of the AKE mechanism are available under license from the DTLA.

### Content Re-encryption

After authentication and the decryption of any protected content stream, the CA module applies secure re-encryption to that stream before it is output at the digital interface.

In the preferred embodiment of the invention, the channel cipher subsystem defined by DTCP is applied as the common re-encryption for content protected by any DVB-compliant CA system which is re-distributed locally over IEEE 1394.

DTCP defines a baseline cipher to be supported by the encryption engine of all compliant devices and applications. Additional optional ciphers may also be applied. The baseline cipher is the M6-S56 block cipher using the converted cipher-block-chaining (C-CBC) mode. This cipher is described in the DTCP specification available under licence from the DTLA.

The AV/C Digital Interface Command Set for Secure Bus System [9] facilitates the control of DTCP link encryption with the AV/C protocol. This is also described in more detail in the DTCP specification [2] and the 1394TA AV/C specification for secure bus systems [9].

### System Renewability

DTCP system renewability is provided by the ability to distribute a list of revoked devices, which would then fail the device authentication process. This information is contained in System Renewability Messages (SRM), which are generated by the DTLA and can be distributed with broadcast content, packaged media, and new devices.

The SRM is required to be stored in non-volatile memory in each DTCP compliant device which implements the Full Authentication level of AKE. When a newer version SRM is received than that currently stored, the device first verifies it as being authentic using the DTLA public key, then stores the new version.

The SRM contains the Certificate Revocation List (CRL). This is a list of device entries which are no longer DTCP compliant. A device entry can be an individual device, or a block of up to 65,535 devices.

For DVB CPCM, the SRM could be carried in a new descriptor which is inserted into the CAT.

Device revocation at a service level could be defined as an extension to the DTCP SRM format. It could also be realised by the service provider within their private broadcast CA system.

The system renewability aspect for the underlying DVB CA system is out of the scope of the invention and is the concern of the service provider. However, in general terms, the replacement of separate CA modules is easier than the replacement of complete receivers.

### AV/C Subunits

The AV/C General specification provides a common communications mechanism over IEEE1394 for all AV/C compliant devices. The AV/C protocol introduces the concept of subunits, as being self-contained functional entities which provide a particular kind of control interface. A physical device can contain one or more AV/C subunits. This preferred embodiment of the invention builds upon AV/C subunits in order to define the environment for the baseline CPCM system.

Referring back to the IDTV 1 and CA module 2 device block diagrams as shown in figures 1 to 4, the CPCM system can be seen as consisting of a controller entity which uses the following AV/C subunits in order to perform the CPCM function:
- Tuner
- Conditional Access
- Panel
- Modem
- Smart Card

The Tuner Subunit [5] provides a control interface which allows an AV/C controller residing in another AV/C device to obtain the available services and control the tuner to output a transport stream containing one or more services on the bus. The output stream can be either the full transport stream, or a partial transport stream consisting only of certain services or their components.

The Conditional Access (CA) Subunit [7] provides a control interface for the descrambling of protected content or services supplied to it via IEEE1394, and for the sourcing of such content to external displays, or other sink devices via IEEE 1394, with link encryption.

The Panel Subunit [8] provides user interface services for AV/C devices. A target device implementing a panel subunit, for example a Conditional Access module, can provide its user interface model and dialogues to a controller device containing display and user input capabilities. The controller relays user interface elements and user input to and from the target device using the AV/C Panel Subunit protocol.

The Modem Subunit makes itself available to other AV/C devices on the cluster by providing a control interface to manage dial-up access to and from the telephony network.

The Smart Card Subunit, modelled on the smart card standard [10] enables an AV/C controller to detect and control the status of, and to exchange data with a smart card inserted in its card slot. As a rule the Smart Card Subunit, if a smart card slot is equipped, would be physically integrated within the CA module, thus not requiring its control interface to be exposed via a corresponding AV/C subunit.

The subunit-specific command and transaction sets for the Tuner, Conditional Access, and Panel Subunits are specified in 1394 Trade Association specifications [5], [7] and [8] respectively. The Tuner extension for DVB systems [6] is also relevant. The Modem and Smart Card Subunits are currently not standardised within the AV/C set of specifications.

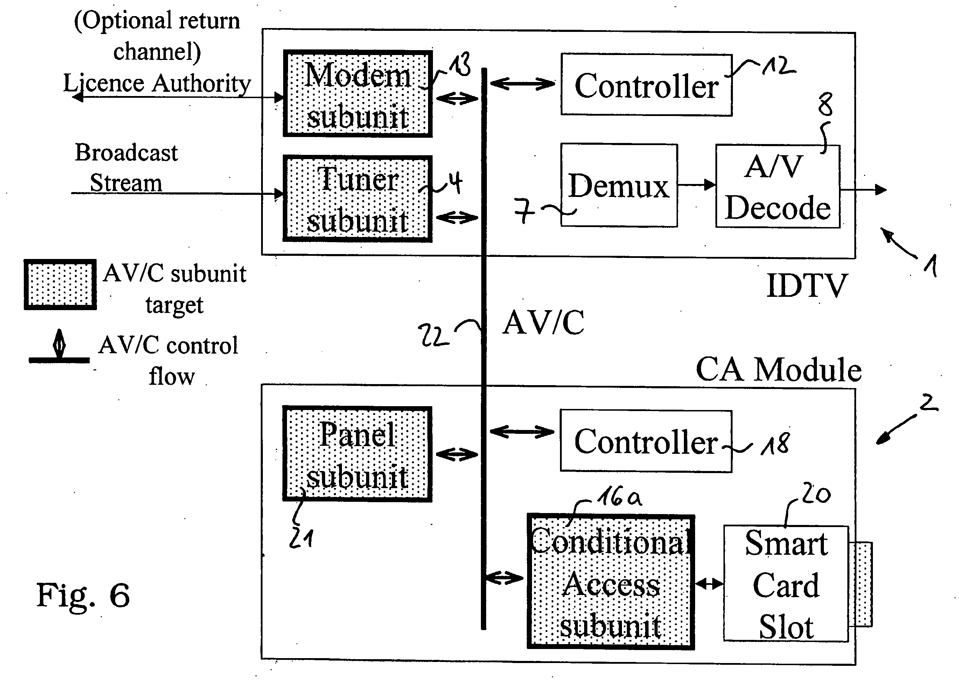

Figure 6 shows the AV/C subunits involved in CPCM for the device split described in the introduction and shown in figure 1. The AV/C "master" controller 12 is in the IDTV 1 which additionally comprises the modem (subunit) 13, the tuner (subunit) 4, the demultiplexer 7, and the AV decoder 8. The CA module 2 comprises the controller 18, the smart card slot 20, a panel subunit 21 and a conditional access subunit 16a which is e.g. comprised in the DTCP module of the IEEE1394 link/physical layer module 6. The "master" controller 12, the modem (subunit) 13, the tuner (subunit) 4, the controller 18, the panel subunit 21 and the conditional access subunit 16a are connected via a control bus 22 for AV/C. The smart card slot is connected to this control bus 22 via the conditional access subunit 16a. The the modem (subunit) 13, the tuner (subunit) 4, the panel subunit 21 and the conditional access subunit 16a are AV/C subunit targets.

In general terms, the physical location and co-location of the subunit entities required for the function of network conditional access is immaterial. Which subunits are required depends on the functional split between the physical devices of the CPCM system at hand. For example, if CPCM is realised between an integrated digital TV (IDTV) and the 1394 Conditional Access module, then the CA module is controlled by the AV/C controller located inside the IDTV, which acts as "master" controller for CPCM. Once this has initiated the decryption of a service in the CA module, the CA module controller may need to control the IDTV's tuner subunit. This is implementation-dependent.

How the IDTV controller retrieves service information from its own tuner subunit can be private to the IDTV implementation and so for this interface need not be AV/C compliant. Furthermore, if the modem subunit is also inside the IDTV, then the interface between this and the controller can be kept private, if the modem is not required to be controlled by the CA module, for example.

Similarly, the smart card slot would normally be inside the CA module, thereby not requiring the AV/C Smart Card interface to be exposed. The conclusion is that for practical implementations of CPCM, the setup becomes simpler.

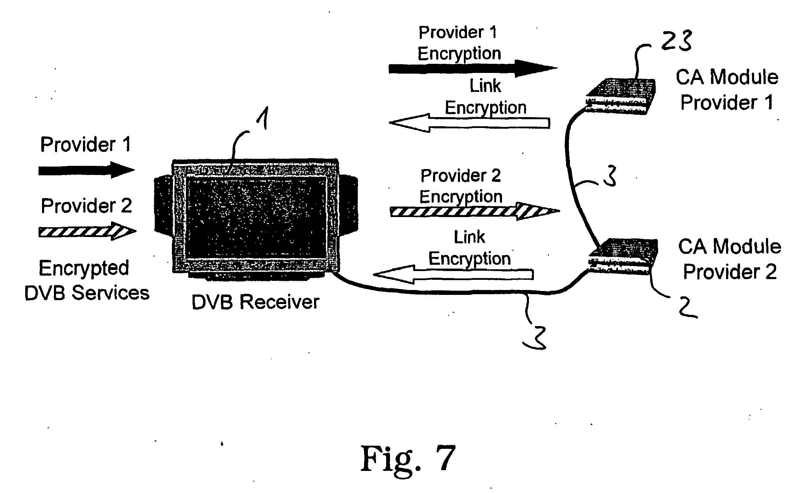

Flexibility is however provided in that particular subunit control interfaces, if implemented and correspondingly exposed via the AV/C protocols, can enable the sharing of their resources among multiple controllers. Figure 7 shows the second preferred embodiment of the present invention according to which two CA modules 2, 23 are interacting with an IDTV 1. In addition to the scenario shown in figure 1, a second CD module 23 is connected to the IEEE1394 link 3 "behind" the CA module 2. When the consumer selects an encrypted service from a first provider "provider 1", the CPCM system automatically negotiates its transfer over the link 3 to and from the relevant CA module from that provider, here e.g. the second CA module 23, and when the consumer selects an encrypted service from a second provider "provider 2", the CPCM system automatically negotiates its transfer over the link 3 to and from the relevant CA module from that provider, here e.g. the CA module 2. The encryption strategy is of course similar to that shown in figure 1, i.e. the encrypted DVB service from provider 1 is supplied to the second CA module 23 with the "provider 1" encryption and returned to the DVB receiver 1 with link encryption, and the encrypted DVB service from provider 2 is supplied to the CA module 2 with the "provider 2" encryption and returned to the DVB receiver 1 also with link encryption.

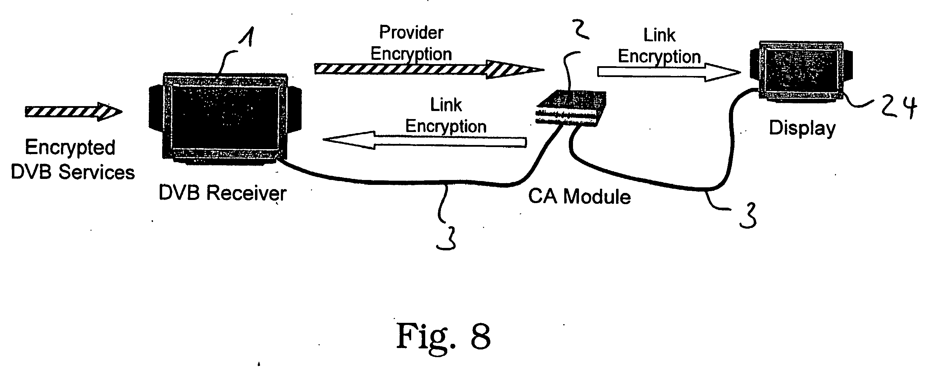

Figure 8 shows a third preferred embodiment of the present invention according to which two display devices are sharing a single CA module over the network. In addition to the scenario shown in figure 1, a display device 24 is connected to the IEEE1394 link 3 "behind" the CA module 2. here, the encrypted DVB service is supplied to the CA module 2 with the provider encryption and returned to the DVB receiver 1 as well as forwarded to the display device 24 with link encryption. It is of course the issue of the service provider implementation as to how far multiple users are able to access the services concurrently. Here, the display device 24 relies on the presence of an AV/C tuner subunit 4 in the DVB receiver 1 in order to access the services available from that tuner 4.

### Content Storage Devices

The storage device in general is both a sink and source device for DTCP protected content, and can be either format-cognizant or format-non-cognizant.

The AV/C set of protocols contains the definition and command set for the Disk Subunit [11]. A "Disk" can take many forms, so there is a specialised subunit specification for the AV hard-disk storage device type [12].

Storage devices in general can have an AV content area and a computer content area, i.e. a file system partition. The AV/C Disk subunit covers the AV content area. The disk subunit makes its stored content available to a controlling device via its set of content storage descriptors and control API, in a similar fashion as the tuner subunit does for broadcast services. The storage descriptors provide an abstracted interface to the content, allowing the secure storage of protected content, as the content can not be accessed by normal low-level file access type operations.

Sink storage devices which implement DTCP must obey the DTCP compliance rules and robustness rules, defined in the DTCP Adopter Agreement [13]. This compliance ensures the integrity of content protection on such storage devices.

### Extension of the Authorised Domain to Mobile Devices

No particular special treatment is necessary for mobile devices, i.e. devices which are not intended to be permanently connected to receiver equipment.

When protected content is transferred or copied to a portable device, authentication is performed in the same manner as for a stationary recording device in the home. The portable device is then able to play back the recorded content freely. If the portable device has digital or analogue output interfaces, a renewed transfer of the protected stored content will occur subject to the normal authentication procedure as for stationary devices.

As with stationary storage devices, mobile storage devices which obey the DTCP compliance and robustness rules ensure that the content protection and copy management system remains intact.

### CPCM Operation Scenarios

Several CPCM scenarios are described in the following in order to illustrate the interaction between CPCM elements.

### User Selects Subscription Service

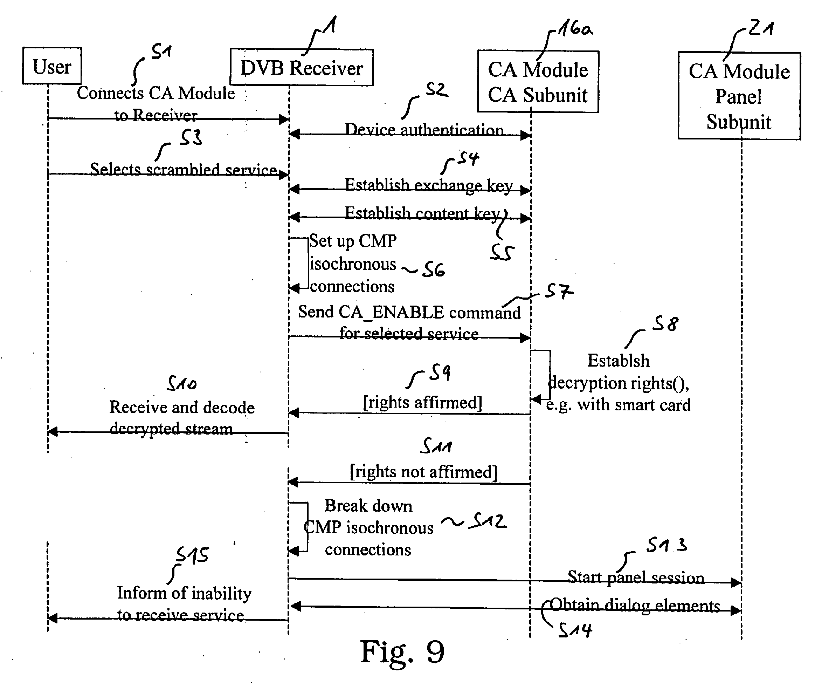

Figure 9 shows the sequence diagram for this scenario. After a user connects the CA module 2 to the receiver 1 in a step S1 and device authentication in a step S2 the user selects a scrambled service in a step S3. Then, the DVB receiver 1 and the CA module 2 establish an exchange key in a step S4 and a content key in a step S5, whereafter the DVB receiver sets up CMP connections in a step S6 and the DVB receiver 1 AV/C controller 12 uses the CA subunit 16a CA_ENABLE command to attempt to start the descrambling of the selected service in a step S7. If the user possesses sufficient rights (checked in a proprietary manner in the CA module in a step S8), then the request is granted in a step S9 and the user views the decrypted service in a step S10. If the request was not granted in a step S11, then the DVB receiver starts the appropriate panel dialogue session in a step S13 and obtains dialogue elements in a step S14 to inform the user why decryption was not possible in a step S15.

The device authentication process shown for this scenario in steps S 1 and S2 takes place for every combination of CPCM compliant devices, but is not shown in the subsequent scenarios.

### User selects impulse PPV event

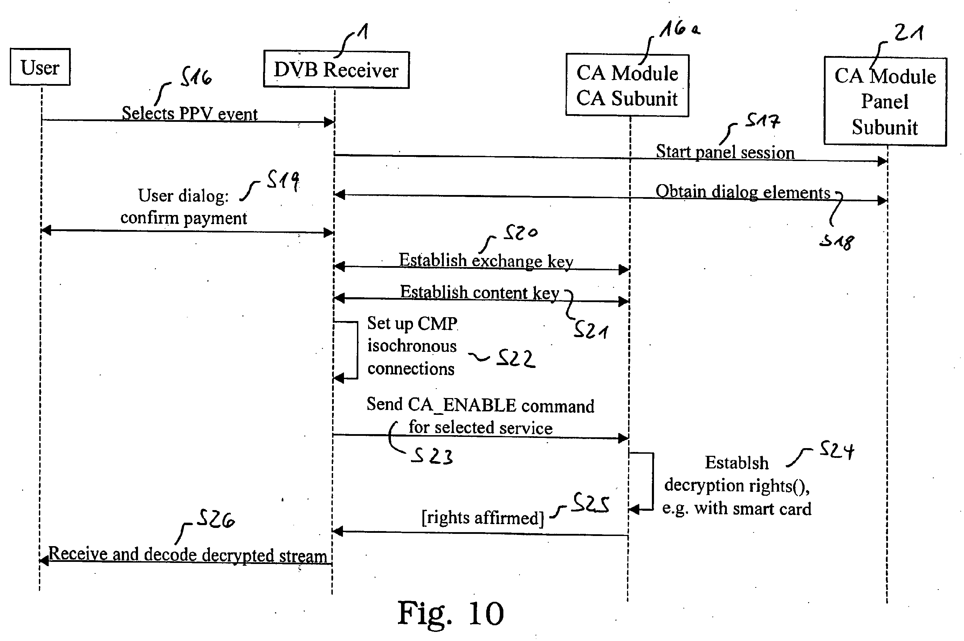

Figure 10 shows the sequence diagram for this scenario. Upon selection of a PPV event by the user in a step S16, the DVB Receiver application first initiates a Panel session in a step S17 obtaining dialogue elements in a step S18 in order to confirm payment in a step S19. Then the decryption is negotiated with the CA Subunit in steps S20 to S26 equally to the above steps S4 to S10. The process of actually carrying out the payment is not covered; this process is private to the service provider.

### Recording of Protected Content

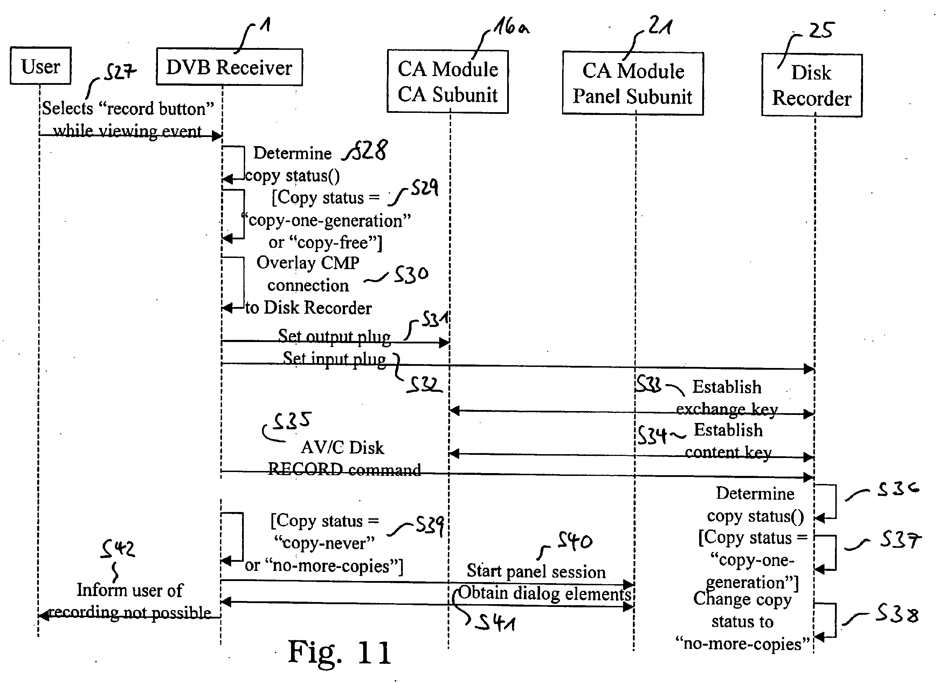

Figure 11 shows the sequence diagram for this scenario. The user is already viewing protected content which is being decrypted by the CA module 2. He wishes to record that content on a CPCM-compliant disk recorder 25, also connected in the IEEE 1394 cluster, in a step S27. The DVB receiver 1 proceeds with the recording only if the CCI is appropriately set for that content. Therefore, a copy status is determined in a step S28.

If "copy-one-generation" or "copy-free" is determined in a step S29 the DVB receiver 1 establishes an overlap CMP connection to the disk recorder 25 in a step S30 by setting an output plug of the CA module 2 in a step S31 and an input plug of the disk recorder 25 in a step S32. The CA module 2 establishes an exchange key with the disk recorder in a step S33 and a content key with the disk recorder in a step S34, whereafter the DVB receiver 1 sends an AV/C disk RECORD command to the disk recorder in a step S35. The disk recorder 25 determines the copy status in a step S36 and if it is determined in a step S37 that the copy status equals to "copy-one-generation" the copy status gets changed to "no-more-copies" in a step S38.

If, on the other hand, after step S28 the copy status is determined to "copy-never" or "no-more-copies" in a step S39, the DVB receiver 1 starts a panel session with the CA module 2 in a step S40 to obtain dialogue elements in a step S41 and to inform the user that the recording is not possible in a step S42.

### Playback of Recorded Protected Content

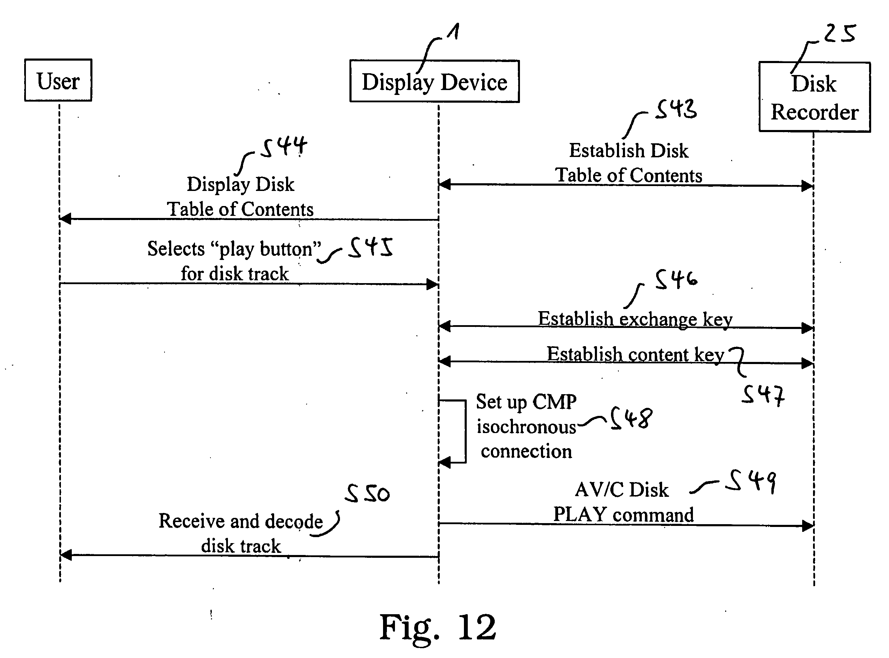

Figure 12 shows the sequence diagram for this scenario. This scenario involves only streams with DTCP encrypted content on the bus 3, i.e. no streams with broadcast CA encryption. First, the display device, e.g. of the DVB tuner/IDTV 1, establishes a disk table of contents by communicating with the disk recorder 25 in a step S43 to display the table of contents in a step S44 to the user which selects a "play button" for a disk track in a step S45. Thereafter the display device 1 establishes an exchange key with the disk recorder 25 in a step S46 and a content key with the disk recorder 25 in a step S47 to be able to set up a CMP isochronous connection in a step S48. After the issurance of an AV/C Disk PLAY command from the display device 1 to the disk recorder 25 in a step S49 the user can receive and decode the disk track in a step S50.

An extension of this scenario would be an actual recording, or copy generation, of the stored content. This would involve the DVB receiver 1 setting up the overlay connection to an attached second recording device and issuing the AV/C RECORD command, but only if the copy status of the content from the storage device is "copy-one-generation" or "copy-free".

### Protection Mechanism for Content

DVB CPCM compliant source and sink devices would first authenticate eachother before the protected content is transferred. The content transfer is secured by link encryption. Sink devices must obey the compliance and robustness rules of the DTCP Adopter Agreement [13]. This ensures the continued protection of content after leaving the CA module.

### DVB CPCM API

### Introduction

CPCM compliant devices can be split into the categories CPCM target 30 and CPCM controller 26.

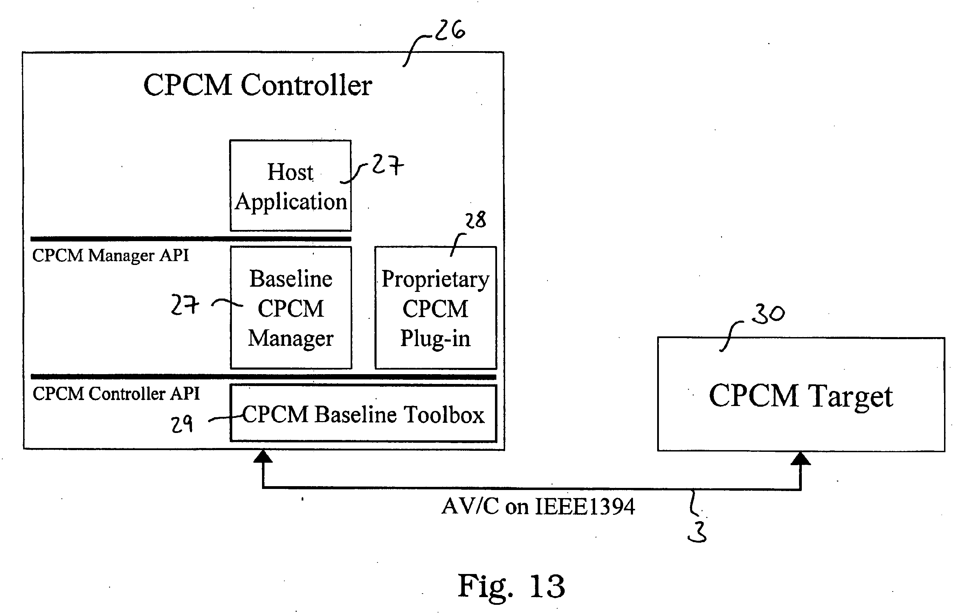

Figure 13 shows the overall architecture of CPCM controller 26 and target 30 devices which are connected via AV/C on the IEEE 1394 bus 3, and the derived system API's.

A CPCM controller 26 comprises a host application 27, as CPCM manager API a baseline CPCM manager 27 and a proprietary CPCM plug-in 28, and as CPCM controller API a CPCM baseline toolbox 29.

Thus the CPCM API's are the CPCM Controller API and CPCM Manager API. The detailed specification of these API's is not given in this specification, rather an outline of their required functionality.

### CPCM Target

A CPCM target 30 is a device that can source and/or sink protected content according to DTCP upon the command of a CPCM controller 26. Examples are a standalone tuner (source only), CA module, storage device (both source and sink).

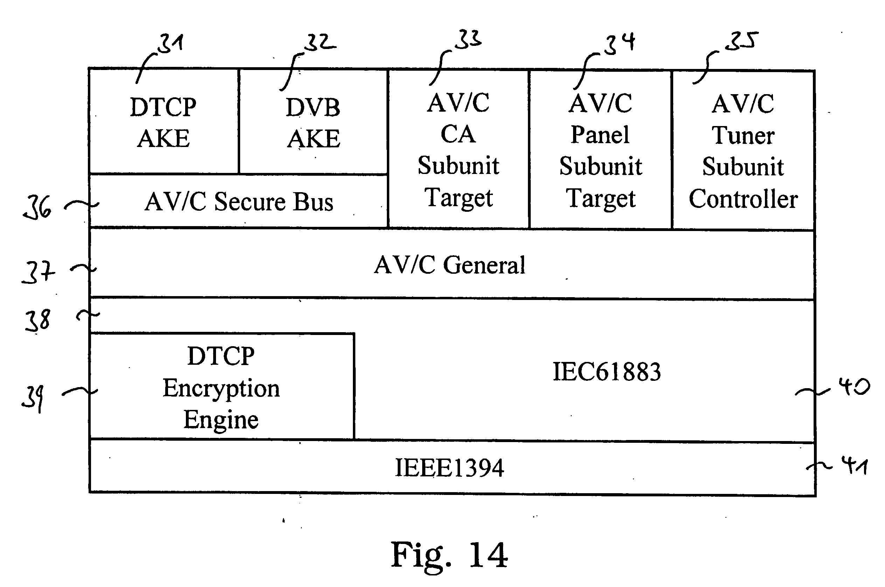

The CPCM target 30 is controlled exclusively by a CPCM controller 26 so does not expose an API. The CPCM target 30 architecture for the example of CA module is shown in figure 14. In this case the CPCM target 30 includes on bottom the IEEE1394 layer(s) 41, a DTCP encryption engine 39 on top of the IEEE 1394 layer(s) 41, the IEC61883 40 on top of the IEEE1394 layer(s) 41 and the DTCP encryption engine 39, the AV/C general layer 37 on top of the IEC61883 40, a AV/C secure bus 36, a AV/C CA subunit target 33, a AV/C panel subunit target 34, and a AV/C tuner subunit target 35 on top of the AV/C general layer 37, and a DTCP AKE 31 and a DVB AKE 32 on top of the AV/C secure bus 36.

Other target devices would have other AV/C subunit target(s) installed.

### CPCM Controller

A CPCM Controller 26 has the functionality to request protected content to be output according to DTCP. Examples are DTV, STB, PC.

A CPCM Controller can also be a CPCM Target 26, but not vice-versa.

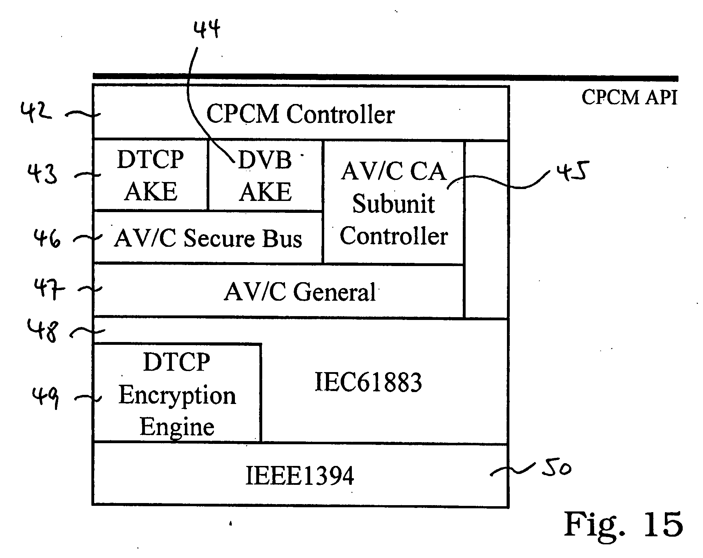

Figure 15 shows the architecture of the CPCM controller. In this case the CPCM controller 26 includes on bottom the IEEE1394 layer(s) 50, a DTCP encryption engine 49 on top of the IEEE1394 layer(s) 50, the IEC61883 48 on top of the IEEE1394 layer(s) 50 and the DTCP encryption engine 49, the AV/C general layer 47 on top of the IEC61883 48, a AV/C secure bus 46, a AV/C CA subunit controller 45 on top of the AV/C general layer 47, a DTCP AKE 43 and a DVB AKE 44 on top of the AV/C secure bus 36, and a CPCM controller layer 42 on top of the DTCP AKE 43, DVB AKE 44, and the AV/C CA subunit controller 45.

The CPCM Controller API would provide the following services:
- decryption of specified service and stream components with specified CA_system_id and copy status
- DVB-specific authentication of dynamically loaded proprietary CPCM plug-in modules
- apply DTCP encryption with chosen copy status to a service to be output on the CPCM external interface
- general AV/C command and response interface between local and remote AV/C subunits other than CA

The AV/C CA subunit controller 45 is an integral part of the CPCM baseline toolbox 29. The AV/C General interface 47 is provided for communications to and from other subunit controllers and targets which are present in the host device. These reside within the CPCM Baseline Manager 27, shown in figure 13. The AV/C General interface part 47 of the CPCM Controller API shall not accept AV/C commands and responses to and from AV/C subunits of type CA, so that circumvention of the integrated CA Subunit Controller is not possible.

DVB AKE 44 is applied for DVB CPCM-specific authentication. This uses the AV/C Secure Bus protocol with a new category code for DVB. Provider-specific authentication and key exchange could be also be provided within DVB AKE 44.

DTCP AKE 43 is applied generally for device authentication and content key exchange.

### CPCM Manager

The CPCM Manager 27 is a resident module in the CPCM Controller device 26. Its tasks are:
- to host AV/C subunit controller(s) and target(s) and interface from these to host device resources
- to handle host applications' requests for the decryption of encrypted services
- to authenticate proprietary CPCM plug-ins before allowing these to access the CPCM Controller resources

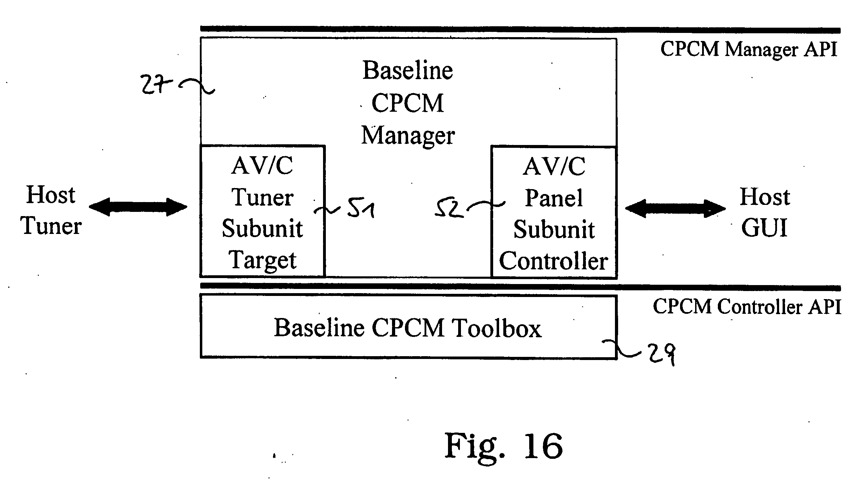

Figure 16 shows the CPCM Manager 27 for the example of the DVB receiver device. In this case the CPCM Manager 27 includes a AV/C tuner subunit target 51 communicating with a host tuner and a AV/C panel subunit controller 52 communicating with a host GUI.

### Preferred Implementation Requirements

### Preferred device requirements

According to the above described preferred embodiments CPCM devices should be equipped with the IEEE 1394 digital interface with DTCP, preferably the S400 variant, providing 400 Mbit/s gross throughput. Silicon is widely available and already deployed for a number of application areas.

### Preferred device manufacturer requirements

Manufacturers of CPCM compliant devices as defined in this specification should take the following actions:
- become an Adopter of DTCP
- acquire device keys from DTLA
- ensure adherence of product designs to the DTCP compliance and robustness rules

### Preferred service provider requirements

The implementation of the DVB CA subsystem is out of the scope of this invention and so is left open for the service provider.

### Usability

From the consumer's point of view, the invention would bring the following advantages:
- Simple and robust physical connection between CPCM-compliant devices
   e.g. provided by the IEEE1394 standard.
- Zero installation and configuration effort
   e.g. IEEE 1394 and the protocols above ensure that connected devices are automatically recognised and can become instantly usable without any user intervention.
- **Flexibility**
   E.g. the IEEE1394-based CPCM cluster could be part of the home network, allowing for example the sharing of CA modules between multiple displays, or the connection of multiple CA modules anywhere in the network.

From a system implementation point of view, because the solution proposed does not involve any content encryption mechanism, it would also be possible to seamlessly combine it with supplementary content encryption systems and digital rights management systems.

### References

[1] IEEE1394-1995, Standard for a High Performance Serial Bus, 30 August 1996. http://www.ieee.org/
[2] Digital Transmission Copy Protection Specification, Volume 1 (Informational Version). http://www.dtcp.com/
[3] IEC61883, Specifications of Digital Interface for Consumer Audio-Video Equipment, Ed1. http://www.iec.ch/
[4] AV/C Digital Interface Command Set, General Specification, Version 4.0, TA Document 1999026, 23 July 2001. http://www.1394ta.org/Technology./ Specifications/Descriptions/AVC General4.OFinal 1.htm
[5] AV/C Tuner Subunit Model and Command Set, Version 2.0, TA Document 1999035, 24 October 2000. http://www.1394ta.org/Technology/Specifications/Descriptions/AvcTunerRevFinal.htm
[6] AV/C Tuner Broadcast System Specification - Digital Video Broadcast, Version 1.0, TA Document 1998005, 15 April 1998. http://www.1394ta.org/ Technology/Specifications/Descriptions/AVC DVB10.htm
[7] AV/C CA Subunit Specification, Version 1.0, TA Document 1999007, 6 April 1999. http://www.1394ta.org/Technology/Specifications/Descriptions/AVC CA Subunit 10.htm
[8] AV/C Panel Subunit Specification, Version 1.1, TA Document 2001001, 8 May 2001. http://www.1394ta.org/Technology/Specifications/Descriptions/Panall Final.htm
[9] AV/C Digital Interface Command Set for Secure Bus System, Version 1.0, TA Document 1998009, 26 January 1999. http: / /www.1394ta.org/Technology/Specifications/Descriptions/AVC SecureBus10.htm
[10] ISO7816-1,2,3, Identification Cards - Integrated Circuit(s) Cards with Contacts, 15 September 1989. http://www.iso.ch/
[11] AV/C Disk Subunit - General Specification, Version 1.0, TA Document 1998013, 26 January 1999. http://www.1394ta.org/Technology/Specifications/Descriptions/AVC Disc10.htm
[12] AV/C Disk Subunit - Hard Disk Drive Device Type Specification, Version 1.0, TA Document 1999030, 10 July 2000. http://www.1394ta.org/Technology/Specifications/Descriptions/AVCHDDI.OFinal.htm
[13] Digital Transmission Protection License Agreement, July 2001. http:// www.dtcp.com/

## Claims

1. Content protection and copy management system for a network (3), comprising a receiver (1) and at least one conditional access module (2), **characterized in that**:
the receiver comprises means to receive at least one encrypted content stream and means to transmit the encrypted content stream through the network to at least one of the conditional access modules (2), and
the conditional access modules comprise means to receive the encrypted content stream, to decrypt the encrypted content stream, to apply a secure link encryption to the decrypted content stream and to output the content stream to the network (3) after applying the secure link encryption.

2. Content protection and copy management system according to claim 1, **characterized by** at least one decoder device (6) comprised in the receiver devices (1) and adapted to receive at least one secure link encrypted content stream through the network (3), to decrypt and eventually process said at least one received secure link encrypted content stream.

3. Content protection and copy management system according to claim 2, **characterized in that** a respective conditional access module(2) authenticates a respective decoder device (6) comprise in the receiver device (1) before outputting a secure link encrypted content stream through the network (3) to said decoder device (6), and preferably before decrypting said corresponding received encrypted content stream.

4. Content protection and copy management system according to claim 3, **characterized in that** a respective receiver device (1) applies a secure link encryption to at least one respective received encrypted content stream before outputting it to the network (3).

5. Content protection and copy management system according to anyone of the preceding claims, **characterized in that** a respective conditional access module (2) performs an authentication and key exchange process before outputting said at least one secure link encrypted content stream to the network (3), and preferably before decrypting said at least one received encrypted content stream.

6. Content protection and copy management system according to anyone of the preceding claims, **characterized in that** system renewability is supported by way of analysing system renewability messages transmitted to the network (3) and revoking devices and/or modules connected to the network (3) accordingly.

7. Content protection and copy management system according to anyone of the preceding claims, **characterized by** a controller entity (12) which uses the conditional access module (2) or a conditional access subunit (16a) providing a control interface for the decryption of encrypted content supplied through the network (3), or for the sourcing of such content to a sink device with link encryption in order to perform the content protection and copy management functionality.

8. Content protection and copy management system according to claim 7, **characterized in that** said controller entity (12) uses a receiver device (1) or tuner subunit (4) providing a control interface which allows a controller entity (12, 18) which might reside in another device (2) to obtain the available contents and control the receiver (1) or tuner (4) to output one or more content streams to the network (3) in order to perform the content protection and copy management functionality.

9. Content protection and copy management system according to claim 7 or 8, **characterized in that** said controller entity (12) uses a panel subunit (21) providing user interface service for a device or module in order to perform the content protection and copy management functionality.

10. Content protection and copy management system according to anyone of claims 7 to 9, **characterized in that** said controller entity (12) uses a modem subunit (13) providing a control interface to manage dial-up access to and from a telephony network (3) in order to perform the content protection and copy management functionality.

11. Content protection and copy management system according to anyone of claims 7 to 10, **characterized in that** said controller entity (12) uses a smart card subunit (20) enabling the controller to detect and control the status of, and to exchange data with a smart card inserted in its smart card slot (20) in order to perform the content protection and copy management functionality.

12. Content protection and copy management system according to anyone of claims 7 to 10, **characterized in that** said controller entity (12) is adapted to request encrypted content to be output from a device to the network.

13. Content protection and copy management system according to anyone of claims 7 to 12, **characterized by** a target entity which is adapted to supply or receive encrypted content on the command of a controller entity (12).

14. Content protection and copy management system according to anyone of the preceding claims, **characterized in that** said secure link encryption is common for all content protection and copy management system compliant devices.

15. Conditional access module (2) for a content protection and copy management system as defined in claim 1, **characterized by**:
an interface (16) to receive at least one encrypted content stream from the receiver (1) through the network (3), a decryption engine (19) to decrypt an encrypted content stream, and an encryption engine (16) to apply a secure link encryption to each decrypted content stream before outputting it to the network (3).

16. Conditional access module (2) according to claim 15, **characterized by** a smart card subunit (20) modelled on the smart card standard to enable an authentication and key exchange process.

17. Conditional access module (2) according to claim 15 or 16, **characterized by** a panel subunit (21) providing a user interface of the conditional access module (2) so that a user interface model and dialogues can be provided to a controller entity (18) containing a user interface, preferably a display or a speech synthesizer and user input capabilities.

18. Conditional access module (2) according to anyone of claims 15 to 17, **characterized in that** it is adapted to receive said at least one encrypted content stream from different sources through the network (3).

19. Conditional access module (2) according to anyone of claims 15 to 18, **characterized in that** it is adapted to output said at least one secure link encrypted content stream to different sinks (1, 24) through the network (3).

20. Method for content protection and copy management for a network (3) wherein a receiver device (1) receives at least one encrypted content stream and wherein a decrypted content stream is encrypted before outputting it to the network (2), **characterized by** receiving the at least one encrypted content stream through the network (3) from the receiver device (1), decrypting a respective received encrypted content stream, and applying a secure link encryption to each decrypted content stream before outputting it to the network (3).

21. Method according to claim 20, **characterized by** authenticating a respective decoder device (6) before outputting a secure link encrypted content stream through the network (3) to said decoder device (6), and preferably before decrypting said corresponding received encrypted content stream.

22. Method according to claim 20 or 21, **characterized by** performing an authentication and key exchange process before outputting said at least one secure link encrypted content stream to the network (3), and preferably before decrypting said at least one received encrypted content stream.

23. Method according to anyone of claims 20 to 22, **characterized by** supporting system renewability by way of analysing system renewability messages transmitted to the network (3) and adapting devices (1, 24) and/or modules (2, 23) connected to the network (3) accordingly.

24. Computer program product comprising computer program means adapted to perform the method steps as defined in anyone of the above claims 20 to 23.

## Patentansprüche

1. System zum Inhaltsschutz und zur Kopierverwaltung für ein Netzwerk (3), umfassend einen Empfänger (1) und zumindest ein Modul für bedingten Zugriff (2), **dadurch gekennzeichnet, dass**:
der Empfänger eine Einrichtung zum Empfangen zumindest eines verschlüsselten Inhaltsstroms und eine Einrichtung zum Übertragen des verschlüsselten Inhaltsstroms über das Netzwerk zu zumindest einem der Module für bedingten Zugriff (2) umfasst, und
die Module für bedingten Zugriff eine Einrichtung zum Empfangen des verschlüsselten Inhaltsstroms, zum Entschlüsseln des verschlüsselten Inhaltsstroms, zum Anwenden einer sicheren Verbindungsverschlüsselung auf den entschlüsselten Inhaltsstrom und zum Ausgeben des Inhaltsstroms auf das Netzwerk (3) nach dem Anwenden der sicheren Verbindungsverschlüsselung umfassen.

2. System zum Inhaltsschutz und zur Kopierverwaltung nach Anspruch 1, **gekennzeichnet durch** zumindest eine Decodierereinrichtung (6), die in der Empfängereinrichtung (1) enthalten und dazu ausgelegt ist, zumindest einen mit sicherer Verbindung verschlüsselten Inhaltsstrom über das Netzwerk (3) zu empfangen, um den zumindest einen empfangenen, mit sicherer Verbindung verschlüsselten Inhaltsstrom zu entschlüsseln und schließlich zu verarbeiten.

3. System zum Inhaltsschutz und zur Kopierverwaltung nach Anspruch 2, **dadurch gekennzeichnet, dass** ein jeweiliges Modul für bedingten Zugriff (2) eine jeweilige, in der Empfängereinrichtung (1) enthaltene Decodierereinrichtung (6) authentifiziert, bevor ein mit sicherer Verbindung verschlüsselter Inhaltsstrom über das Netzwerk (3) an die Decodierereinrichtung (6) ausgegeben wird, und vorzugsweise bevor der entsprechende empfangene, verschlüsselte Inhaltsstrom entschlüsselt wird.

4. System zum Inhaltsschutz und zur Kopierverwaltung nach Anspruch 3, **dadurch gekennzeichnet, dass** eine jeweilige Empfängereinrichtung (1) eine sichere Verbindungsverschlüsselung auf zumindest einen jeweiligen empfangenen Inhaltsstrom anwendet, bevor sie ihn auf das Netzwerk (3) ausgibt.

5. System zum Inhaltsschutz und zur Kopierverwaltung nach einem der vorangehenden Ansprüche, **dadurch gekennzeichnet, dass** ein jeweiliges Modul für bedingten Zugriff (2) einen Authentifikations- und Schlüsselaustauschprozess durchführt, bevor es den zumindest einen mit sicherer Verbindung verschlüsselten Inhaltsstrom auf das Netzwerk (3) ausgibt, und vorzugsweise bevor es den zumindest einen empfangenen, verschlüsselten Inhaltsstrom entschlüsselt.

6. System zum Inhaltsschutz und zur Kopierverwaltung nach einem der vorangehenden Ansprüche, **dadurch gekennzeichnet, dass** eine Systemerneuerbarkeit durch Analysieren von Systememeuerbarkeitsmeldungen, die auf das Netzwerk (3) übertragen wurden, und dementsprechend Aufheben von Einrichtungen und/oder Modulen, die mit dem Netzwerk (3) verbunden sind, unterstützt wird.

7. System zum Inhaltsschutz und zur Kopierverwaltung nach einem der vorangehenden Ansprüche, **gekennzeichnet durch** eine Steuereinrichtungsentität (12), welche das Modul für bedingten Zugriff (2) oder eine Untereinheit für bedingten Zugriff (16a), bereitstellend eine Steuerschnittstelle für die Entschlüsselung von verschlüsseltem Inhalt, der über das Netzwerk (3) geliefert wird, oder für das Liefern solchen Inhalts an eine Senkeneinrichtung mit Verbindungsverschlüsselung, verwendet, um die Funktionalität für den Inhaltsschutz und die Kopierverwaltung durchzuführen.

8. System zum Inhaltsschutz und zur Kopierverwaltung nach Anspruch 7, **dadurch gekennzeichnet, dass** die Steuereinrichtungsentität (12) eine Empfängereinrichtung (1) oder eine Abstimm-Untereinheit (4), bereitstellend eine Steuerschnittstelle, welche es einer Steuereinrichtungsentität (12, 18), die sich in einer anderen Einrichtung (2) befinden könnte, erlaubt, die verfügbaren Inhalte zu erhalten und den Empfänger (1) oder die Abstimmeinrichtung (4) zum Ausgeben eines oder mehrerer Inhaltsströme auf das Netzwerk (3) zu steuern, verwendet, um die Funktionalität für den Inhaltsschutz und die Kopierverwaltung durchzuführen.

9. System zum Inhaltsschutz und zur Kopierverwaltung nach Anspruch 7 oder 8, **dadurch gekennzeichnet, dass** die Steuereinrichtungsentität (12) eine Steuerpult-Untereinheit (21) verwendet, die einen Benutzerschnittstellendienst für eine Einrichtung oder ein Modul bereitstellt, um die Funktionalität für den Inhaltsschutz und die Kopierverwaltung durchzuführen.

10. System zum Inhaltsschutz und zur Kopierverwaltung nach einem der Ansprüche 7 bis 9, **dadurch gekennzeichnet, dass** die Steuereinrichtungsentität (12) eine Modem-Untereinheit (13) verwendet, die eine Steuerschnittstelle zum Verwalten eines Einwählzugangs in ein und aus einem Telefonienetzwerk (3) bereitstellt, um die Funktionalität für den Inhaltsschutz und die Kopierverwaltung durchzuführen.

11. System zum Inhaltsschutz und zur Kopierverwaltung nach einem der Ansprüche 7 bis 10, **dadurch gekennzeichnet, dass** die Steuereinrichtungsentität (12) eine Chipkarten-Untereinheit (20) verwendet, die es der Steuereinrichtung ermöglicht, den Status einer in ihren Chipkarteneinschub (20) eingesetzten Chipkarte zu erfassen und zu steuern und Daten mit dieser auszutauschen, um die Funktionalität für den Inhaltsschutz und die Kopierverwaltung durchzuführen.

12. System zum Inhaltsschutz und zur Kopierverwaltung nach einem der Ansprüche 7 bis 10, **dadurch gekennzeichnet, dass** die Steuereinrichtungsentität (12) dazu ausgelegt ist, anzufordern, dass verschlüsselter Inhalt von einer Einrichtung auf das Netzwerk ausgegeben wird.

13. System zum Inhaltsschutz und zur Kopierverwaltung nach einem der Ansprüche 7 bis 12, **gekennzeichnet durch** eine Zielentität, welche dazu ausgelegt ist, verschlüsselten Inhalt auf den Befehl einer Steuereinrichtungsentität (12) zu liefern oder zu empfangen.

14. System zum Inhaltsschutz und zur Kopierverwaltung nach einem der vorangehenden Ansprüche, **dadurch gekennzeichnet, dass** die sichere Verbindungsverschlüsselung für alle Inhaltsschutz- und Kopierverwaltungs-kompatiblen Einrichtungen gemein ist.

15. Modul für bedingten Zugriff (2) für ein System zum Inhaltsschutz und zur Kopierverwaltung wie in Anspruch 1 definiert, **gekennzeichnet durch**
eine Schnittstelle (16) zum Empfangen zumindest eines verschlüsselten Inhaltsstroms von dem Empfänger (1) über das Netzwerk (3), eine Entschlüsselungsmaschine (19) zum Entschlüsseln eines verschlüsselten Inhaltsstroms, und eine Verschlüsselungsmaschine (16) zum Anwenden einer sicheren Verbindungsverschlüsselung auf jeden entschlüsselten Inhaltsstrom, bevor dieser auf das Netzwerk (3) ausgegeben wird.

16. Modul für bedingten Zugriff (2) nach Anspruch 15, **gekennzeichnet durch** eine Chipkarten-Untereinheit (20), die nach dem Chipkarten-Standard ausgebildet ist, um einen Authentifikations- und Schlüsselaustauschprozess zu ermöglichen.

17. Modul für bedingten Zugriff (2) nach Anspruch 15 oder 16, **gekennzeichnet durch** eine Steuerpult-Untereinheit (21), die eine Benutzerschnittstelle des Moduls für bedingten Zugriff (2) bereitstellt, so dass ein Benutzerschnittstellenmodell und Dialoge für eine Steuereinrichtungsentität (12) bereitgestellt werden können, die eine Benutzerschnittstelle, vorzugsweise eine Anzeige oder einen Sprachgenerator und Benutzereingabefähigkeiten, enthält.

18. Modul für bedingten Zugriff (2) nach einem der Ansprüche 15 bis 17, **dadurch gekennzeichnet, dass** es dazu ausgelegt ist, den zumindest einen verschlüsselten Inhaltsstrom aus verschiedenen Quellen über das Netzwerk (3) zu empfangen.

19. Modul für bedingten Zugriff (2) nach einem der Ansprüche 15 bis 18, **dadurch gekennzeichnet, dass** es dazu ausgelegt ist, den zumindest einen mit sicherer Verbindung verschlüsselten Inhaltsstrom an verschiedene Senken (1, 24) über das Netzwerk (3) auszugeben.

20. Verfahren zum Inhaltsschutz und zur Kopierverwaltung für ein Netzwerk (3), bei dem eine Empfängereinrichtung (1) zumindest einen verschlüsselten Inhaltsstrom empfängt und bei dem ein entschlüsselter Inhaltsstrom verschlüsselt wird, bevor er auf das Netzwerk (3) ausgegeben wird, **gekennzeichnet durch** ein Empfangen des zumindest einen verschlüsselten Inhaltsstroms über das Netzwerk (3) von der Empfängereinrichtung (1), ein Entschlüsseln eines jeweiligen empfangenen, verschlüsselten Inhaltsstroms, und ein Anwenden einer sicheren Verbindungsverschlüsselung auf jeden entschlüsselten Inhaltsstrom, bevor er auf das Netzwerk (3) ausgegeben wird.

21. Verfahren nach Anspruch 20, **gekennzeichnet durch** ein Authentifizieren einer jeweiligen Decodierereinrichtung (6) vor einem Ausgeben eines mit sicherer Verbindung verschlüsselten Inhaltsstroms über das Netzwerk (3) an die Decodierereinrichtung (6), und vorzugsweise vor einem Entschlüsseln des entsprechenden empfangenen, verschlüsselten Inhaltsstroms.

22. Verfahren nach Anspruch 20 oder 21, **gekennzeichnet durch** ein Durchführen eines Authentifikations- und Schlüsselaustauschprozesses vor einem Ausgeben des zumindest einen mit sicherer Verbindung verschlüsselten Inhaltsstroms auf das Netzwerk (3), und vorzugsweise vor einem Entschlüsseln des zumindest einen empfangenen, verschlüsselten Inhaltsstroms.

23. Verfahren nach einem der Ansprüche 20 bis 22, **gekennzeichnet durch** ein Unterstützen einer Systemerneuerbarkeit **durch** Analysieren von Systememeuerbarkeitsmeldungen, die auf das Netzwerk (3) übertragen wurden, und entsprechendes Anpassen von Einrichtungen (1, 24) und/oder Modulen (2, 23), die mit dem Netzwerk (3) verbunden sind.

24. Computerprogrammprodukt, umfassend ein Computerprogrammittel, das dazu angepasst ist, die Verfahrensschritte wie in einem der vorstehenden Ansprüche 20 bis 23 definiert durchzuführen.

## Revendications

1. Système de protection de contenu et de gestion de copie pour un réseau (3), comprenant un récepteur (1) et au moins un module d'accès conditionnel (2), **caractérisé en ce que** :
le récepteur comprend un moyen pour recevoir au moins un flux de données de contenu crypté et un moyen pour transmettre le flux de données de contenu crypté au travers du réseau jusqu'à au moins l'un des modules d'accès conditionnel (2) ; et
les modules d'accès conditionnel comprennent un moyen pour recevoir le flux de données de contenu crypté, pour décrypter le flux de données de contenu crypté, pour appliquer un cryptage de liaison sécurisée sur le flux de données de contenu décrypté et pour émettre en sortie le flux de données de contenu sur le réseau (3) après application du cryptage de liaison sécurisée.

2. Système de protection de contenu et de gestion de copie selon la revendication 1, **caractérisé par** au moins un dispositif de décodeur (6) qui est constitué dans le dispositif de récepteur (1) et qui est adapté pour recevoir au moins un flux de données de contenu crypté de liaison sécurisée par l'intermédiaire du réseau (3), pour décrypter et éventuellement traiter ledit au moins un flux de données de contenu crypté de liaison sécurisée reçu.

3. Système de protection de contenu et de gestion de copie selon la revendication 2, **caractérisé en ce qu'**un module d'accès conditionnel respectif (2) authentifie un dispositif de décodeur respectif (6) constitué dans le dispositif de récepteur (1) avant d'émettre en sortie un flux de données de contenu crypté de liaison sécurisée par l'intermédiaire du réseau (3) jusqu'audit dispositif de décodeur (6) et de préférence avant de décrypter ledit flux de données de contenu crypté reçu correspondant.

4. Système de protection de contenu et de gestion de copie selon la revendication 3, **caractérisé en ce qu'**un dispositif de récepteur respectif (1) applique un cryptage de liaison sécurisée sur au moins un flux de données de contenu crypté reçu respectif avant son émission en sortie sur le réseau (3).

5. Système de protection de contenu et de gestion de copie selon l'une quelconque des revendications précédentes, **caractérisé en ce qu'**un modèle d'accès conditionnel respectif (2) réalise un processus d'authentification et d'échange de clé avant d'émettre en sortie ledit au moins un flux de données de contenu crypté de liaison sécurisée sur le réseau (3) et de préférence avant de décrypter ledit au moins un flux de données de contenu crypté reçu.

6. Système de protection de contenu et de gestion de copie selon l'une quelconque des revendications précédentes, **caractérisé en ce que** la capacité de renouvellement système est supportée au moyen de l'analyse de messages de capacité de renouvellement système qui sont transmis au réseau (3) et au moyen de la révocation de dispositifs et/ou de modules connectés au réseau (3) en conséquence.

7. Système de protection de contenu et de gestion de copie selon l'une quelconque des revendications précédentes, **caractérisé par** une entité de contrôleur (12) qui utilise le module d'accès conditionnel (2) ou une sous-unité d'accès conditionnel (16a) qui constitue une interface de commande pour le décryptage d'un contenu crypté appliqué par l'intermédiaire du réseau (3) ou pour le sourçage d'un tel contenu sur un dispositif collecteur avec un cryptage de liaison afin de réaliser la fonctionnalité de protection de contenu et de gestion de copie.

8. Système de protection de contenu et de gestion de copie selon la revendication 7, **caractérisé en ce que** ladite entité de contrôleur (12) utilise un dispositif de récepteur (1) ou une sous-unité de tuner (4) constituant une interface de commande qui permet qu'une entité de contrôleur (12, 18) qui pourrait résider dans un autre dispositif (2) obtienne le contenu disponible et commande le récepteur (1) ou le tuner (4) pour émettre en sortie un ou plusieurs flux de données de contenu sur le réseau (3) afin de réaliser la fonctionnalité de protection de contenu et de gestion de copie.

9. Système de protection de contenu et de gestion de copie selon la revendication 7 ou 8, **caractérisé en ce que** ladite entité de contrôleur (12) utilise une sous-unité de panneau (21) assurant un service d'interface utilisateur pour un dispositif ou un module afin de réaliser la fonctionnalité de protection de contenu et de gestion de copie.

10. Système de protection de contenu et de gestion de copie selon l'une quelconque des revendications 7 à 9, **caractérisé en ce que** ladite entité de contrôleur (12) utilise une sous-unité de modem (13) qui constitue une interface de commande pour gérer un accès par composition de numéro de téléphone sur et depuis un réseau de téléphonie (3) afin de réaliser la fonctionnalité de protection de contenu et de gestion de copie.

11. Système de protection de contenu et de gestion de copie selon l'une quelconque des revendications 7 à 10, **caractérisé en ce que** ladite entité de contrôleur (12) utilise une sous-unité de carte à puce (20) qui valide le contrôleur pour détecter et commander l'état d'une carte à puce insérée dans sa fente de carte à puce (20) et pour échanger des données avec cette même carte afin de réaliser la fonctionnalité de protection de contenu et de gestion de copie.

12. Système de protection de contenu et de gestion de copie selon l'une quelconque des revendications 7 à 10, **caractérisé en ce que** ladite entité de contrôleur (12) est adaptée pour demander qu'un contenu crypté soit émis en sortie depuis un dispositif sur le réseau.

13. Système de protection de contenu et de gestion de copie selon l'une quelconque des revendications 7 à 12, **caractérisé par** une entité cible qui est adaptée pour appliquer ou recevoir un contenu crypté lors de la commande d'une entité de contrôleur (12).

14. Système de protection de contenu et de gestion de copie selon l'une quelconque des revendications précédentes, **caractérisé en ce que** ledit cryptage de liaison sécurisée est commun pour tous les dispositifs compatibles avec le système de protection de contenu et de gestion de copie.

15. Module d'accès conditionnel (2) pour un système de protection de contenu et de gestion de copie selon la revendication 1, **caractérisé par** :
une interface (16) pour recevoir au moins un flux de données de contenu crypté depuis le récepteur (1) par l'intermédiaire du réseau (3), un moteur de décryptage (19) pour décrypter un flux de données de contenu crypté et un moteur de cryptage (16) pour appliquer un cryptage de liaison sécurisée à chaque flux de données de contenu décrypté avant son émission en sortie sur le réseau (3).

16. Module d'accès conditionnel (2) selon la revendication 15, **caractérisé par** une sous-unité de carte à puce (20) qui est modélisée sur le standard de carte à puce pour permettre un processus d'authentification et d'échange de clé.

17. Module d'accès conditionnel (2) selon la revendication 15 ou 16, **caractérisé par** une sous-unité de panneau (21) qui constitue une interface utilisateur du module d'accès conditionnel (2) de telle sorte qu'un modèle d'interface utilisateur et des dialogues puissent être appliqués sur une entité de contrôleur (18) qui contient une interface utilisateur, de préférence un affichage ou un synthétiseur de parole et des capacités d'entrée d'utilisateur.

18. Module d'accès conditionnel (2) selon l'une quelconque des revendications 15 à 17, **caractérisé en ce qu'**il est adapté pour recevoir ledit au moins un flux de données de contenu crypté en provenance de différentes sources par l'intermédiaire du réseau (3).

19. Module d'accès conditionnel (2) selon l'une quelconque des revendications 15 à 18, **caractérisé en ce qu'**il est adapté pour émettre en sortie ledit au moins un flux de données de contenu crypté de liaison sécurisée sur différents collecteurs (1, 24) par l'intermédiaire du réseau (3).

20. Procédé de protection de contenu et de gestion de copie pour un réseau (3), dans lequel un dispositif de récepteur (1) reçoit au moins un flux de données de contenu crypté et dans lequel un flux de données de contenu décrypté est crypté avant son émission en sortie sur le réseau (2), **caractérisé par** la réception d'au moins un flux de données de contenu crypté par l'intermédiaire du réseau (3) depuis le dispositif de récepteur (1), par le décryptage d'un flux de données de contenu crypté reçu respectif et par l'application d'un cryptage de liaison sécurisée sur chaque flux de données de contenu décrypté avant son émission en sortie sur le réseau (3).

21. Procédé selon la revendication 20, **caractérisé par** l'authentification d'un dispositif de décodeur respectif (6) avant l'émission en sortie d'un flux de données de contenu crypté de liaison sécurisée par l'intermédiaire du réseau (3) sur ledit dispositif de décodeur (6) et de préférence avant le décryptage dudit flux de données de contenu crypté reçu correspondant.

22. Procédé selon la revendication 20 ou 21, **caractérisé par** la réalisation d'un processus d'authentification et d'échange de clé avant émission en sortie dudit au moins un flux de données de contenu crypté de liaison sécurisée sur le réseau (3) et de préférence avant décryptage dudit au moins un flux de données de contenu crypté reçu.

23. Procédé selon l'une quelconque des revendications 20 à 22, **caractérisé par** le support d'une capacité de renouvellement système au moyen d'une analyse de messages de capacité de renouvellement système qui sont transmis au réseau (3) et par l'adaptation de dispositifs (1, 24) et/ou de modules (2, 23) qui sont connectés au réseau (3) en conséquence.

24. Produit de programme d'ordinateur comprenant un moyen de programme d'ordinateur adapté pour réaliser les étapes de procédé telles que définies selon l'une quelconque des revendications 20 à 23 mentionnées ci avant.
